# EUROPÄISCHE PATENTSCHRIFT

(11) **EP 3 885 597 B1**
(45) Veröffentlichungstag und Bekanntmachung des Hinweises auf die Patenterteilung: **10.07.2024**
(21) Anmeldenummer: 20165611.3
(22) Anmeldetag: 25.03.2020
(51) Int. Cl.: F16D 3/68, G01B 7/00

(54) **KUPPLUNG UND VERFAHREN ZUM BERÜHRUNGSLOSEN ERFASSEN VON VERSCHLEISS AN DER KUPPLUNG**
CLUTCH AND METHOD OF CONTACTLESS DETECTION OF THE WEAR OF THE CLUTCH
EMBRAYAGE ET MÉTHODE DE DÉTECTION SANS CONTACT DE L'USURE DE L'EMBRAYAGE

(43) Veröffentlichungstag der Anmeldung: 29.09.2021
(73) Patentinhaber: Flender GmbH, 46395 Bocholt (DE)
(72) Erfinder: Kleinewegen, Stefan, 46395 Bocholt (DE)
(74) Vertreter: Michalski Hüttermann & Partner Patentanwälte mbB

(56) Entgegenhaltungen:
- DE-A1- 3 545 991
- DE-C1- 19 756 451

## Beschreibung

Die Erfindung betrifft eine Kupplung, die dazu ausgebildet ist, dass ein darin vorliegender Verschleißzustand berührungslos erfasst wird. Die Erfindung betrifft auch ein Verfahren, das dazu geeignet ist, bei einer entsprechenden Kupplung den vorliegenden Verschleißzustand zu ermitteln. Gleichermaßen betrifft die Erfindung ein dazu ausgebildetes Computerprogrammprodukt, eine entsprechende Steuereinheit und ein dementsprechendes Sensorkit. Ebenfalls betrifft die Erfindung eine Industrie-Applikation, die über eine entsprechende Kupplung verfügt.

Aus EP 1 998 147 B1 ist eine Messeinrichtung zur berührungslosen Erfassung eines Drehwinkels eines Rotors bekannt. Die Messeinrichtung weist einen ersten Körper auf, der als Rotor dient und auf dem ein Magnet angebracht ist. Auf einem zweiten Körper ist ein magnetempfindliches Element angeordnet, das radial versetzt zum Magneten angeordnet ist. Mittels des magnetempfindlichen Elements wird ein Drehwinkel des ersten Körpers, also des Rotors, ermittelt.

Aus DE 197 56 451 C1 ist eine Reibungskupplung bekannt, bei der mit Hilfe einer axial verlagerbaren Anpressplatte eine Kupplungsscheibe zwischen der Anpressplatte und einem Schwungrad reibschlüssig verpresst werden kann, wobei die Anpressplatte und ein feststehendes Kupplungsgehäuse jeweils einen Magneten aufweisen, dessen Magnetfeld von einem Sensor erfasst werden kann. Durch einen Vergleich der Messwerte für den auf einem bekannten Abstand feststehenden Magneten und dem mit der Anpressplatte mitverlagerten Magneten, kann der Hubweg der Anpressplatte und damit der Verschleißzustand der Kupplungsscheibe detektiert werden.

Aus DE 35 45 991 A1 ist eine Kupplung bekannt, bei der an einem Kupplungsteil ein Ringmagnet und an einem anderen Kupplungsteil axial gegenüberliegend zum Ringmagnet ein Hallsensor vorgesehen ist.

Kupplungen stellen verschleißbehaftete Komponenten dar, die entsprechend wartungsbedürftig sind. Es besteht die technische Zielsetzung, vorliegende Verschleißzustände in Kupplungen präzise, zuverlässig und in einfacher Weise zu ermitteln. Der Erfindung liegt die Aufgabenstellung zugrunde, eine verbesserte Möglichkeit bereitzustellen, bei einer Kupplung den vorliegenden Verschleißzustand zu ermitteln.

Die Aufgabenstellung wird durch eine erfindungsgemäße Kupplung mit den Merkmalen des Anspruchs 1 gelöst, die eine erste und eine zweite Kupplungshälfte umfasst. Durch die Kupplung wird eine Antriebsleistung entlang einer Drehachse, also ein Drehmoment und eine Drehzahl, von der ersten zur zweiten Kupplungshälfte geleitet. Die Kupplung kann dazu beispielsweise als Klauenkupplung, als Zahnkupplung oder als Lamellenkupplung ausgebildet sein. Zwischen der ersten und der zweiten Kupplungshälfte stellt sich zwischen einem verschleißfreien und einem verschleißbehafteten Zustand entlang einer Umfangsrichtung, entlang der sich die Kupplung im bestimmungsgemäßen Betrieb um die Drehachse dreht, ein Versatz ein. Zum Erfassen eines derartigen Verschleißes der Kupplung ist an der ersten Kupplungshälfte ein erster Magnet angeordnet. Ferner ist zum Erfassen des Verschleißes an der zweiten Kupplungshälfte ein zweiter Magnet angeordnet. Durch einen fortschreitenden Verschleiß ist ein Umfangsabstand zwischen dem ersten und zweiten Magneten dementsprechend veränderbar. Hieraus ergibt sich zwischen dem ersten und zweiten Magneten eine magnetische Wechselwirkung, die berührungslos erfassbar ist. Ein derartiges berührungsloses Erfassen kann mittels geeigneter Sensoren mit erhöhter Präzision erfolgen. Die skizzierte Änderung des Umfangsabstands zwischen dem ersten und zweiten Magneten stellt ein Maß für den in der Kupplung vorliegenden Verschleiß dar, das präzise erfassbar ist. Der erste und zweite Magnet erfordern keine eigene Stromversorgung und können in einfacher Weise an der ersten und zweiten Kupplungshälfte angeordnet werden, insbesondere starr befestigt sein. Eine Vorrichtung zum Erfassen der magnetischen Wechselwirkung zwischen dem ersten und zweiten Magneten ist deshalb separat benachbart zur Kupplung einfach montierbar. Die erfindungsgemäße Kupplung bietet eine präzise Erfassung des vorliegenden Verschleißes mit einer reduzierten Bauteilanzahl, die kosteneffizient herstellbar und montierbar sind.

In einer Ausführungsform der beanspruchten Kupplung wird jeweils durch den ersten und zweiten Magneten ein Magnetfeld erzeugt. Die Magnetfelder des ersten und zweiten Magneten treten in Wechselwirkung und rufen ein kombiniertes Magnetfeld hervor. Das kombinierte Magnetfeld liegt in einem Bereich zwischen dem ersten und zweiten Magneten und in deren Umgebung. Der erste und zweite Magnet sind zueinander beweglich ausgebildet, indem die erste und zweite Kupplungshälfte zueinander beweglich sind. Insbesondere einer relativen Bewegung zwischen der ersten und zweiten Kupplungshälfte entlang der Umfangsrichtung folgen der erste und zweite Magnet, so dass sich deren Umfangsabstand ändert. Dazu können der erste und zweite Magnet beispielsweise in einer Axialrichtung, also entlang der Drehachse der Kupplung, benachbart zueinander angeordnet sein. Insbesondere können der erste und zweite Magnet jeweils an einer Außenfläche der ersten bzw. zweiten Kupplungshälfte angeordnet sein. Die magnetische Wechselwirkung zwischen dem ersten und zweiten Magneten infolge einer Relativbewegung zwischen der ersten und zweiten Kupplungshälfte führt dementsprechend zu einer Veränderung des kombinierten Magnetfelds. Diese wiederum ist berührungslos erfassbar.

Darüber hinaus kann an der zweiten Kupplungshälfte ein dritter Magnet angeordnet sein. Der zweite und dritte Magnet sind an der zweiten Kupplungshälfte in Umfangsrichtung beabstandet angeordnet. Insbesondere können der zweite und dritte Magnet derart angeordnet sein, dass in einem montierten Zustand der Kupplung der erste Magnet entlang der Umfangsrichtung zwischen den zweiten und dritten Magneten positioniert ist. Dadurch ist ein eindeutiges kombiniertes Magnetfeld erzeugbar. Beispielsweise können so bei einem Erfassen des kombinierten Magnetfelds Zeitdifferenzen zwischen dem Passieren des ersten, zweiten und dritten Magneten an einer Sensorvorrichtung ermittelt werden. Ausgehend hiervon ist beispielsweise erkennbar, in welche Drehrichtung die Kupplung rotiert. Darüber hinaus wird durch die Verwendung von zusätzlichen Magneten, also einem dritten, vierten, usw. Magneten, die erzielbare Messgenauigkeit gesteigert.

Ferner kann die Veränderung des kombinierten Magnetfelds eine Änderung einer magnetischen Flussdichte, eine Änderung eines Gradienten der magnetischen Flussdichte und/oder eine Richtungsänderung von magnetischen Feldlinien des kombinierten Magnetfelds umfassen. Der Gradient kann dabei ein örtlicher oder ein zeitlicher Gradient sein. Die Veränderung des kombinierten Magnetfelds ist dabei als eine lokale Veränderung aufzufassen, die eine im Wesentlichen punktförmige Position innerhalb des kombinierten Magnetfeldes darstellt. Eine magnetische Flussdichte ist präzise messbar und ein Gradient einer magnetischen Flussdichte durch mehrfache Messungen an unterschiedlichen Positionen ebenso. Durch den Verschleiß der Kupplung werden dadurch präzise erfassbare Messgrößen hervorgerufen, die dementsprechend ein exaktes Maß für den vorliegenden Verschleißzustand darstellen.

In einer weiteren Ausführungsform tritt die Veränderung des kombinierten Magnetfelds in einem Bereich zwischen dem ersten und zweiten Magneten ein. Alternativ oder ergänzend tritt die Veränderung des kombinierten Magnetfelds in einem Bereich neben dem ersten oder dem zweiten Magneten ein, also axial außen. Im Bereich zwischen dem ersten und zweiten Magneten liegt, bei entsprechender Ausrichtung der Magnete, eine erhöhte magnetische Flussdichte und ein betragsmäßig hoher Gradient der magnetischen Flussdichte vor und ist dementsprechend einfach eindeutig identifizierbar. Dementsprechend erlaubt ein Erfassen der Veränderung im Bereich zwischen dem ersten und zweiten Magneten eine besonders zuverlässige Ermittlung des vorliegenden Verschleißzustands. Alternativ können der erste und zweite Magnet derart ausgerichtet sein, dass die magnetische Flussdichte zwischen diesen reduziert ist. Dementsprechend liegt ein eindeutig erkennbares Minimum der magnetischen Flussdichte zwischen dem ersten und zweiten Magneten vor. In einem Bereich neben dem ersten oder zweiten Magneten weisen die magnetischen Feldlinien eine Schlaufenform auf. Im Bereich neben dem ersten oder zweiten Magneten kann so eine Messung mit erhöhter Präzision durchgeführt werden.

Erfindungsgemäß ist zwischen der ersten und zweiten Kupplungshälfte ein verschleißbehaftetes Dämpfungselement angeordnet. Das Dämpfungselement kann insbesondere im Wesentlichen als Ring mit einer Mehrzahl an sternförmig abstehenden Druckkörpern ausgebildet sein. Des Weiteren kann das Dämpfungselement aus einem elastischen Werkstoff wie Gummi oder einem anderen Elastomer herstellt sein. Derartige Dämpfungselemente können beispielsweise bei Klauenkupplungen eingesetzt werden. Dementsprechend kann die beanspruchte Kupplung als Klauenkupplung ausgebildet sein. Verschleißbehaftete Dämpfungselemente zeigen einen hinreichend hohen, und damit entsprechend exakt messbaren Verschleiß. Infolgedessen ist bei entsprechenden Kupplungen eine erhöhte Genauigkeit beim Erfassen des vorliegenden Verschleißzustands erzielbar. Ferner werden durch ein verschleißbehaftetes Dämpfungselement hochfrequente Störungen, auch zu einem Verändern des kombinierten Magnetfelds führen, reduziert. Dadurch wird die Ermittlung des vorliegenden Verschleißzustandes weiter vereinfacht und die Zuverlässigkeit hierbei gesteigert. Alternativ kann die Kupplung auch als Elastomerkupplung, insbesondere als Steckkupplung ausgebildet sein. Weiter alternativ kann die Kupplung auch als hochelastische Kupplung, insbeondere als Reifenkupplung, insbesondere als Vollgummi-Reifenkupplung, ausgebildet sein. Derartige Kupplungen weisen im Betrieb einen hohen Verdrehwinkel auf, so dass eine besonders präzise Erfassung des Verschleißzustands durch die vorliegende Lösung ermöglicht wird. Ferner kann bei derartigen Kupplungen auch eine kurzzeitige Überlastsituation erkannt werden. Je höher der Verdrehwinkel im bestimmungsgemäßen Betrieb ist, umso genauer und zuverlässiger ist eine kurzzeitige Überlastsituation an der Kupplung erkennbar.

Die zugrundeliegende Aufgabenstellung durch ein erfindungsgemäßes System gelöst, das eine Kupplung und eine Sensorvorrichtung umfasst. Die Sensorvorrichtung weist mindestens einen Sensor auf, der dazu ausgebildet ist, zumindest eine physikalische Größe eines Magnetfelds berührungslos zu erfassen. Die Sensorvorrichtung ist mit der Kupplung kombiniert, die gemäß zumindest einer der oben skizzierten Ausführungsformen ausgebildet sein kann. Mittels der Sensorvorrichtung ist damit eine Veränderung des kombinierten Magnetfelds an der Kupplung erfassbar, die wiederum charakteristisch für den vorliegenden Verschleißzustand der Kupplung ist. Derartige Sensorvorrichtungen können separat eingerichtet, gewartet und ausgetauscht werden. Dementsprechend ist die Sensorvorrichtung austauschbar ohne dass hierzu eine Unterbrechung des Betriebs der Kupplung notwendig ist. Das beanspruchte System ist somit modular herstellbar, weist eine erhöhte Wirtschaftlichkeit auf und kann auch im Rahmen einer Nachrüstung von bestehenden Kupplungen eingerichtet werden.

In eine Ausführungsform des beanspruchten Systems kann die Sensorvorrichtung stationär in einer Umgebung des Systems angeordnet sein. Beispielsweise kann die Sensorvorrichtung starr in der Umgebung montiert und aufgebaut werden. Die Sensorvorrichtung kann dadurch in einfacher Weise bei einer Montage positioniert werden und an eine Stromversorgung und/oder eine kommunikative Datenverbindung angeschlossen werden. Eine aufwendige Installation von mitdrehenden elektronischen Komponenten wird somit vermieden, die anfällig sind für hohe mechanische Beanspruchungen. Dies wiederum erlaubt für die Sensorvorrichtung die Verwendung einfacher und kosteneffizienter Sensoren. Ferner ist die Sensorvorrichtung derart angeordnet, dass durch sie zumindest ein Bereich des kombinierten Magnetfelds erfassbar ist. Insbesondere kann der Bereich zwischen dem ersten und zweiten Magneten an der Kupplung und/oder ein Bereich neben dem ersten oder zweiten Magneten erfasst werden. In Abhängigkeit von den Erfordernissen der jeweiligen Kupplung ist die Sensorvorrichtung an einer wählbaren Position platzierbar und so beispielsweise eine besonders präzise und/oder zuverlässige Erfassung des vorliegenden Verschleißzustands durchgeführt werden.

Darüber hinaus kann im beanspruchten System die Sensorvorrichtung zum Erfassen der Änderung der magnetischen Flussdichte, des Gradienten der magnetischen Flussdichte und/oder der Richtungsänderung von magnetischen Feldlinien des kombinierten Magnetfelds ausgebildet sein. Derartige physikalische Größen sind schnell und präzise erfassbar und erlauben eine exakte Auswertung, durch die ein vorliegender Verschleißzustand der Kupplung ermittelbar ist. Insbesondere kann der zumindest eine Sensor als Hall-Sensor ausgebildet sein. Hall-Sensoren erlauben eine berührungslose Messung einer magnetischen Flussdichte mit einem hinreichend weiten Messbereich und hinreichend hoher Abtastrate. Ferner sind Hall-Sensoren kompakt, was eine platzsparende Montage der Sensorvorrichtung ermöglicht. Ferner können Hall-Sensoren als Gradienten-Hall-Sensoren ausgebildet sein, die einen örtlichen Gradienten der vorliegenden magnetischen Flussdichte erlauben. Insgesamt bieten Hall-Sensoren ein hohes Maß an Messgenauigkeit und Messauflösung, was wiederum eine exakte Ermittlung des vorliegenden Verschleißzustands in der Kupplung ermöglicht. Alternativ kann der Sensor auch als Schalter ausgebildet sein, die durch ein Passieren eines Magnetfelds betätigbar sind. Derartige Sensoren können beispielsweise als Reed-Kontakte ausgebildet sein. Beispielsweise kann die Sensoreinheit mehrere Sensoren umfassen, die als derartige Schalter ausgebildet sind und jeweils einem Magnet zugeordnet sein. Die Sensoren werden bei einem Passieren des entsprechenden Magneten betätigt, und eine Zeitdifferenz zwischen diesen Betätigungen erfasst. Hieraus ist, unter Berücksichtigung weiterer Betriebsgrößen, wie beispielsweise das vorliegende Drehmoment, ein Verschleißzustand der Kupplung ableitbar. In einer weiteren Ausführungsform des beanspruchten Systems sind an der ersten Kupplungshälfte der erste Magnet und an der zweiten Kupplungshälfte der zweite und dritte Magnet angeordnet. Zwischen den so hervorgerufenen drei Betätigungen von zumindest zwei Sensoren, die wie skizziert als Schalter betätigbar sind, zwei Zeitdifferenzen erfassbar. Dadurch wird die Präzision der bei der Ermittlung des Verschleißzustands weiter gesteigert.

Gleichermaßen wird die dargestellte Aufgabenstellung durch ein erfindungsgemäßes Verfahren gelöst. Das Verfahren dient zum Ermitteln eines Verschleißzustands einer Kupplung, die eine erste und eine zweite Kupplungshälfte umfasst. An der ersten Kupplungshälfte ist ein erster Magnet angeordnet und an der zweiten Kupplungshälfte ein zweiter Magnet. Durch den ersten und zweiten Magneten wird ein kombiniertes Magnetfeld hervorgerufen, das durch eine Relativbewegung zwischen der ersten und zweiten Kupplungshälfte veränderbar ist. Das Verfahren umfasst einen ersten Schritt, in dem ein bestimmungsgemäßer Betrieb der Kupplung eingeleitet wird. Der bestimmungsgemäße Betrieb kann beispielsweise als ein stationärer Betrieb, also mit im Wesentlichen konstanter Drehzahl, ausgebildet sein. Wenn der bestimmungsgemäße Betrieb eingestellt ist, erfolgt ein zweiter Schritt, in dem zumindest eine physikalische Größe des kombinierten Magnetfelds erfasst wird. Das Erfassen der zumindest einen physikalischen Größe wird mit einer entsprechenden Sensorvorrichtung durchgeführt. Die physikalische Größe des kombinierten Magnetfelds kann beispielsweise eine magnetische Flussdichte, ein Gradient der magnetischen Flussdichte und/oder eine Änderung von magnetischen Feldlinien des kombinierten Magnetfelds sein. In einem dritten Schritt erfolgt ein Ermitteln einer Abweichung zwischen dem kombinierten Magnetfeld und einem Referenzmagnetfeld. Die Abweichung wird basierend auf der zumindest einen physikalischen Größe des kombinierten Magnetfelds ermittelt. Das Referenzmagnetfeld kann beispielsweise dem kombinierten Magnetfeld in einem verschleißfreien Zustand der Kupplung entsprechen, das gemessen wird. In einem vierten Schritt erfolgt ein Ermitteln des vorliegenden Verschleißzustands der Kupplung mittels der im dritten Schritt ermittelten Abweichung. Dazu kann für die Abweichung beispielsweise ein Schwellenwert festgelegt sein, wobei ein Überschreiten oder Unterschreiten des Schwellenwerts ein Vorliegen eines Verschleißzustands anzeigt, der eine Warnung oder eine Wartungsarbeit gebietet. Die Abweichung zwischen dem kombinierten Magnetfeld und dem Referenzmagnetfeld entspricht erfindungsgemäß einem Verdrehwinkel zwischen der ersten und zweiten Kupplungshälfte. Der Verdrehwinkel wird durch Verschleiß hervorgerufen.

In einer Ausführungsform des beanspruchten Verfahrens kann das Ermitteln der zumindest einen physikalischen Größe berührungslos erfolgen. Das kann eine Sensorvorrichtung, die mindestens einen Sensor aufweist, beispielsweise einen Hall-Sensor, vorgesehen sein. Die Sensorvorrichtung kann dementsprechend stationär in einer Umgebung der Kupplung angebracht werden. Dies erlaubt es, das Verfahren mit einem Minimum an Modifikationen oder Anbauten an der Kupplung durchzuführen. Folglich kann das beanspruchte Verfahren ohne Weiteres auch im Rahmen einer Nachrüstung an einer bestehenden Kupplung durchgeführt werden.

Des Weiteren kann im beanspruchten Verfahren ein in der Kupplung vorliegendes Drehmoment berücksichtigt werden. In Abhängigkeit vom vorliegenden Drehmoment kann sich zwischen der ersten und zweiten Kupplungshälfte ein Verdrehwinkel einstellen. Beispielsweise kann so ein Dämpfungselement zwischen der ersten und zweiten Kupplungshälfte zusammengedrückt werden. Zur Berücksichtigung des vorliegenden Drehmoments kann beispielsweise eine Mehrzahl an Referenzmagnetfeldern verwendet werden, die jeweils auf ein vorliegendes Drehmoment bezogen sind. Das beanspruchte Verfahren kann dadurch in einfacher Weise bei einer Mehrzahl an unterschiedlichen Betriebszuständen durchgeführt werden.

Darüber hinaus kann im beanspruchten Verfahren zumindest ein Messsignal, das die mindestens eine erfasst physikalische Größe des kombinierten Magnetfelds darstellt, auf Störungen gefiltert werden. Darunter sind beispielsweise Vibrationen zu verstehen, durch die auch eine Veränderung des kombinierten Magnetfelds hervorgerufen werden. Durch einen entsprechenden Frequenzfilter können so unter anderem hochfrequente Signalanteile im Messignal entfernt werden. Alternativ kann durch gezieltes Auswerten eines solchen Hochfrequenten Signalanteils auch gezielt eine Störung im Betrieb der Kupplung ermittelt werden und eine Warnung ausgegeben werden. Alternativ oder ergänzend kann auch das vorliegende Drehmoment und/oder die vorliegende Drehzahl in der Kupplung berücksichtigt werden. Betriebsbedingte Verformungen in der Kupplung, beispielsweise durch Kompression von Dämpfungselementen, sind dementsprechend mit einer Charakteristik vom vorliegenden Verschleißzustand unterscheidbar. Solche drehzahlspezifischen bzw. drehmomentspezifischen Charakteristiken können beispielsweise als Datensatz in einer Auswertungseinheit gespeichert sein.

Die Aufgabenstellung wird ebenso durch ein erfindungsgemäßes Computerprogrammprodukt gelöst. Das Computerprogrammprodukt ist remanent auf einem Datenträger gespeichert und ist dazu ausgebildet, auf einer Auswertungseinheit gespeichert und ausgeführt zu werden. Das Computerprogrammprodukt kann dabei vollständig als Software oder festverdrahtet, also als FPGA, Chip oder Mikrocontroller, oder einer Kombination hiervon ausgebildet sein. Des Weiteren kann das Computerprogrammprodukt monolithisch oder modular aufgebaut sein. Unter einem monolithischen Computerprogrammprodukt ist ein solches zu verstehen, das auf einer einzigen Hardwareplattform ausführbar ist und den Funktionsumfang verwirklicht. Unter einem modularen Computerprogrammprodukt ist ein System von mehreren Teilprogrammen zu verstehen, die auf unterschiedlichen Hardwareplattformen ausführbar sind, die über eine kommunikative Datenverbindung zusammenwirken und so den Funktionsumfang verwirklicht. Das erfindungsgemäße Computerprogrammprodukt ist dazu ausgebildet, Messsignale von einer Sensorvorrichtung zu empfangen und zu verarbeiten, mit der ein Magnetfeld erfasst wird. Erfindungsgemäß ist das Computerprogrammprodukt dazu ausgebildet, zumindest eines der oben skizzierten Verfahren durchzuführen.

Gleichermaßen wird die oben skizzierte Aufgabenstellung durch eine nicht beanspruchte Auswertungseinheit gelöst. Die Auswertungseinheit ist zu einem Auswerten von Messsignalen von einer Sensorvorrichtung ausgebildet, durch die zumindest eine physikalische Größe eines Magnetfelds erfasst wird. Die Auswertungseinheit weist einen Speicher und eine Recheneinheit zu einer Ausführung eines Computerprogrammprodukts auf. Die Auswertungseinheit ist erfindungsgemäß mit einem Computerprogrammprodukt ausgestattet, das gemäß einer der oben dargestellten Ausführungsformen ausgebildet ist.

Die zugrundeliegende Aufgabenstellung wird auch durch eine erfindungsgemäße Industrie-Applikation gelöst. Die Industrie-Applikation umfasst eine Antriebseinheit, die beispielswiese als Elektromotor, Verbrennungsmotor oder Hydraulikmotor ausgebildet sein kann. Durch die Antriebseinheit wird über eine Ausgangswelle eine Antriebsleistung bereitgestellt, die zu einer Abtriebseinheit zu übertragen ist. Die Antriebseinheit kann beispielsweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ausgebildet sein. Die Abtriebseinheit weist hierzu eine Eingangswelle auf, die über eine Kupplung mit der Ausgangswelle der Antriebseinheit verbunden ist. Die Kupplung ist erfindungsgemäß nach einer der oben skizzierten Ausführungsformen ausgebildet. Ferner kann die Kupplung mit einer Sensorvorrichtung zu einem System gehören, mit dem der Verschleißzustand der Kupplung erfassbar ist. Durch die Verwendung einer erfindungsgemäßen Kupplung ist deren Verschleißzustand präzise erfassbar, so dass Ausfälle der Industrie-Applikation vermieden werden können. Des Weiteren können Wartungsarbeiten an der Kupplung zielführender und kosteneffizienter geplant werden, und so die Wirtschaftlichkeit der Industrie-Applikation gesteigert werden.

Ferner wird die oben dargestellte Aufgabenstellung durch eine erfindungsgemäße Verwendung einer Sensorvorrichtung gelöst. Die Sensorvorrichtung umfasst mindestens einen Sensor, der dazu ausgebildet ist, zumindest eine physikalische Größe eines Magnetfelds zu erfassen. Die Sensorvorrichtung wird erfindungsgemäß dazu eingesetzt, an einer Kupplung, die eine erste und eine zweite Kupplungshälfte aufweist, den vorliegenden Verschleißzustand zu ermitteln. Sensorvorrichtungen, die eine physikalische Größe eines Magnetfelds erfassen, bieten ein hohes Maß an Messgenauigkeit und Zuverlässigkeit, die eine dauerhaft durchgehende Erfassung ermöglichen. Darüber hinaus sind entsprechende Sensorvorrichtungen kompakt ausgebildet und damit in einfacher Weise an einer bestehenden Kupplung montierbar. Dadurch, dass solche Sensorvorrichtungen die entsprechende physikalische Größe berührungslos erfassen, sind umfangreiche Montagearbeiten an den Kupplungshälften selbst entbehrlich. Die Sensorvorrichtung kann in vorteilhafter Weise dazu mit einer Kupplung gemäß einer der oben skizzierten Ausführungsformen kombiniert werden. Ferner kann auf die entsprechende Sensorvorrichtung ein Verfahren gemäß einer der oben dargestellten Ausführungsformen durchgeführt werden.

Die Erfindung wird im Folgenden anhand einzelner Ausführungsformen beschrieben. Die Merkmale der einzelnen Ausführungsformen sind dabei untereinander kombinierbar. Die Figuren sind insoweit in gegenseitiger Ergänzung zu lesen, dass gleiche Bezugszeichen in den Figuren auch die gleichen technischen Bedeutungen haben. Es zeigen im Einzelnen:
- FIG 1: eine erste Ausführungsform der beanspruchten Kupplung;
- FIG 2: eine Detailansicht der ersten Ausführungsform der beanspruchten Kupplung;
- FIG 3: ein Diagramm einer ersten Ausführungsform des beanspruchten Verfahrens;
- FIG 4: ein Diagramm einer zweiten Ausführungsform des beanspruchten Verfahrens;
- FIG 5: eine zweite Ausführungsform der beanspruchten Kupplung;
- FIG 6: ein Diagramm einer dritten Ausführungsform des beanspruchten Verfahrens;
- FIG 7: einen Aufbau einer erstes Ausführungsform des beanspruchten Systems;
- FIG 8: einen Aufbau einer ersten Ausführungsform der beanspruchten Industrie-Applikation.

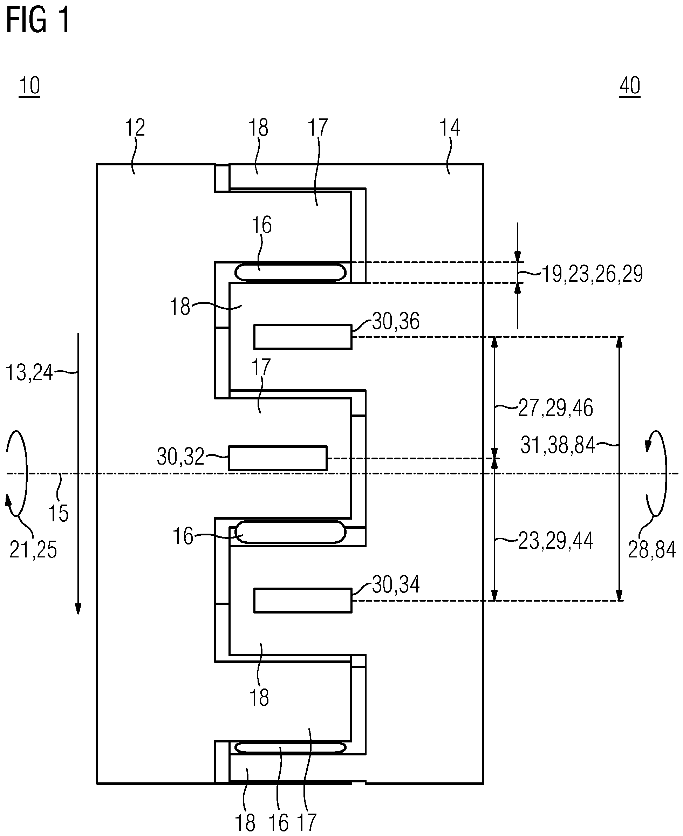

FIG 1 zeigt eine erste Ausführungsform der beanspruchten Kupplung 10, die eine erste und eine zweite Kupplungshälfte 12, 14 umfasst. Im bestimmungsgemäßen Betrieb dreht sich die Kupplung 10 mit einer Drehgeschwindigkeit 21 um eine Drehachse 15, um die ein Drehmoment 25 eingeleitet wird. Die erste Kupplungshälfte 12 weist eine Mehrzahl an ersten Klauen 17 auf und die zweite Kupplungshälfte 14 eine Mehrzahl an zweiten Klauen 18, so dass die Kupplung 10 als Klauenkupplung ausgebildet ist. Zwischen den ersten und zweiten Klauen 17, 18 sind elastische Dämpfungselemente 16 angeordnet, die aus Gummi oder einem Elastomer hergestellt sind. Durch das Drehmoment 25, das in die erste Kupplungshälfte 12 eingeleitet wird, wird eine Last 28 angetrieben, die zu einer Abtriebseinheit 84 gehört. Dadurch wird eine Umfangsbewegung 24 in eine Umfangsrichtung 13, die der Drehrichtung 21 der Drehmoments 25 entspricht, von der ersten auf die zweite Kupplungshälfte 12, 14 übertragen. Die elastischen Dämpfungselemente 16 sind dabei jeweils zwischen einer ersten und einer zweiten Klaue 17, 18 eingeklemmt und werden über eine Druckkraft 26 zusammengedrückt. Zwischen einer ersten und einer zweiten Klaue 17, 18 stellt sich dadurch ein Umfangsabstand 23 ein. Durch Verschleiß 29 an der Kupplung 10, insbesondere an den elastischen Dämpfungselementen 16 ändert sich der Umfangsabstand 23 zwischen einer ersten und einer zweiten Klaue 17, 18. Dies entspricht einem Verdrehwinkel 19 zwischen der ersten und zweiten Kupplungshälfte 12, 14.

An der ersten Kupplungshälfte 12 ist an deren Außenfläche im Bereich einer ersten Klaue 17 ein Magnet 30 angeordnet, der als erster Magnet 32 dient. An der zweiten Kupplungshälfte 14 ist an deren Außenfläche im Bereich einer zweiten Klaue 18 ein Magnet 30 angeordnet, der als zweiter Magnet 34 dient. Der erste und zweite Magnet 32, 34 sind starr mit der ersten bzw. zweiten Kupplungshälfte 12, 14 verbunden. Eine Relativbewegung zwischen der ersten und zweiten Kupplungshälfte 12, 14 entlang der Umfangsrichtung 13 führt damit zu einer korrespondierenden Relativbewegung zwischen dem ersten und zweiten Magneten 32, 34.

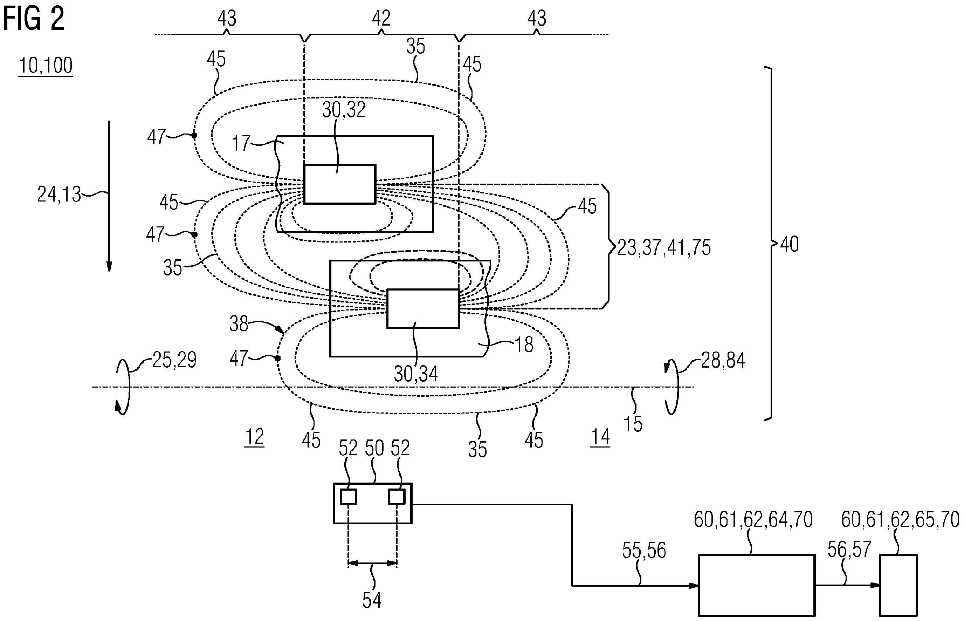

In FIG 2 sind der Aufbau und Funktionsweise der ersten Ausführungsform der Kupplung 10 gemäß FIG 1 detaillierter dargestellt. Im Einzelnen zeigt FIG 2 die Magnete 30, die als erster und zweiter Magnet 32, 34 dienen, die auf der ersten bzw. zweiten Klaue 17, 18 der nicht näher dargestellten Kupplungshälften 12, 14 der Kupplung 10 angeordnet sind. Das elastische Dämpfungselement 16 ist zur besseren Übersicht in FIG 2 nicht abgebildet. Die Kupplung 10 rotiert in FIG 2 um die Drehachse 15 mit einer Drehrichtung 21, entlang der Drehmoment 25 in die Kupplung 10 eingeleitet wird, um eine Last 28 einer Abtriebseinheit 84 anzutreiben. Hierdurch stellt sich eine Umfangsbewegung 24 entlang einer Umfangsrichtung 134 ein. Der erste und der zweite Magnet 32, 34 erzeugen magnetische Feldlinien 35, die miteinander in Wechselwirkung treten. Der erste und zweite Magnet 32, 34 erzeugen dadurch ein kombiniertes Magnetfeld 40. In einem Umfangsbereich 41 zwischen dem ersten und zweiten Magneten 32, 34 weist das kombinierte Magnetfeld 40 eine erhöhte magnetische Flussdichte 37 auf. Ein Gradient 75 der Flussdichte 37, insbesondere ein örtlicher Gradient, im Umfangsbereich 41 ist dabei von einem Umfangsabstand 23 zwischen dem ersten und zweiten Magneten 32, 34 abhängig. Je geringer der Umfangsabstand 23 zwischen dem ersten und zweiten Magneten 32, 34 ist, umso höher ist der Gradient 75 betragsmäßig. Die magnetische Flussdichte 37 und/oder der Gradient 75 der magnetischen Flussdichte 37 werden durch eine Sensorvorrichtung 50 erfasst, die Sensoren 52 aufweist. Die Sensoren 52 sind jeweils dazu ausgebildet, zumindest eine physikalische Größe des kombinierten Magnetfelds 40 zu erfassen. Dazu ist die Sensorvorrichtung 50 an einem mittleren Axialbereich 42 stationär angebracht. Bei der Umfangsbewegung 24 der Kupplung 10 passiert das kombinierte Magnetfeld 40 die Sensorvorrichtung 50.

Darüber hinaus wird die Form der magnetischen Feldlinien 35 in einem mittleren Axialbereich 42 und in randseitigen Axialbereichen 43 durch den Umfangsabstand 23 zwischen dem ersten und zweiten Magneten 32, 34 bestimmt. Die magnetischen Feldlinien 35 verlaufen im Wesentlichen in Schlaufenform und weisen dementsprechend bezogen auf die Drehachse 15 aus einer Radialrichtung betrachtet einen Feldlinienwinkel 38 auf. Zwischen dem ersten und zweiten Magneten 32, 34 werden im kombinierten Magnetfeld 40 je Seite in den randseitigen Axialbereichen 43 drei Schlaufen 45 auf. Jede der Schlaufen 45 weist einen Scheitelpunkt 47 auf, an dem der Feldlinienwinkel 38 einem rechten Winkel entspricht. Ferner treten die Feldlinien 35 im Wesentlichen senkrecht an den Polen des ersten bzw. zweiten Magneten 32, 34 aus diesen aus. Folglich entspricht der Feldlinienwinkel 38 im Bereich des ersten und zweiten Magneten 32, 34 deren Ausrichtung beim Einbau. Der vorliegende Feldlinienwinkel 38 einer Feldlinie 35 ist durch die Sensorvorrichtung 50 erfassbar. Dazu ist die Sensorvorrichtung 50 mit mindestens zwei Sensoren 52 auf, zwischen denen ein Axialabstand 54 vorliegt und die so einen Gradienten-Hall-Sensor bilden. In Abhängigkeit vom Umfangsabstand 23 zwischen dem ersten und zweiten Magneten 32, 34 ist bei einem Passieren des kombinierten Magnetfelds 40 an der Sensorvorrichtung 50 die Lage von charakteristischen Feldlinienwinkeln 38 erfassbar. Dementsprechend ist aus der Erfassung der Feldlinienwinkel 38 in einem randseitigen Axialbereich 43 der Umfangsabstand 23 zwischen dem ersten und zweiten Magneten 32, 34 ermittelbar. Die zugehörigen Messsignale 55 werden von der Sensorvorrichtung 50 über eine kommunikative Datenverbindung 56 an eine Auswertungseinheit 60 übermittelt. In der Auswertungseinheit 60 ist ein Referenzmagnetfeld 64 gespeichert, mit dem die Messergebnisse 55 verglichen werden. Dazu weist die Auswertungseinheit 60 einen Speicher 61 und eine Recheneinheit 62 auf, mit denen ein Computerprogrammprodukt 70 ausführbar ist. Das Computerprogrammprodukt 70 ist dazu ausgebildet, basierend auf den Messsignalen 55 von der Sensorvorrichtung 50 durch einen Vergleich mit dem Referenzmagnetfeld 64 einen Verschleißzustand 29 der Kupplung 10 zu ermitteln.

Die Auswertungseinheit 60 ist insbesondere dazu ausgebildet, den Verschleißzustand 29 anhand einer Erfassung von Feldlinienwinkeln 38, einer magnetischen Flussdichte 37 und/oder eines Gradienten 75 der magnetischen Flussdichte 37 zu ermitteln. Die Ermittlung des Verschleißzustands 29 anhand von Messungen der magnetischen Flussdichte 37 im Umfangsbereich 41 zwischen dem ersten und zweiten Magneten 32, 34 einerseits und andererseits anhand von Messungen von Feldlinienwinkeln 38 stellen unterschiedliche Ausführungsformen eines beanspruchten Verfahrens 100 dar. Ferner ist die Auswertungseinheit 60 über eine kommunikative Datenverbindung 56 mit einer übergeordneten Auswertungseinheit 65 verbunden. An die übergeordnete Auswertungseinheit 65 werden berechnete Daten 57 gesendet. Die übergeordnete Auswertungseinheit 65 weist einen Speicher 61 und eine Recheneinheit 62 zur Ausführung eines Computerprogrammprodukts 70 ausgebildet, das dazu geeignet ist, die berechneten Daten 57 zu verarbeiten. Das Computerprogrammprodukt 70 in der übergeordneten Auswertungseinheit 65 kann beispielsweise zu einer Erfahrungsdatenbank gehören oder eine Statistikfunktion durchführen. Die übergeordnete Auswertungseinheit 65 kann beispielsweise als Leitrechner, Handgerät oder als Computer-Cloud ausgebildet sein.

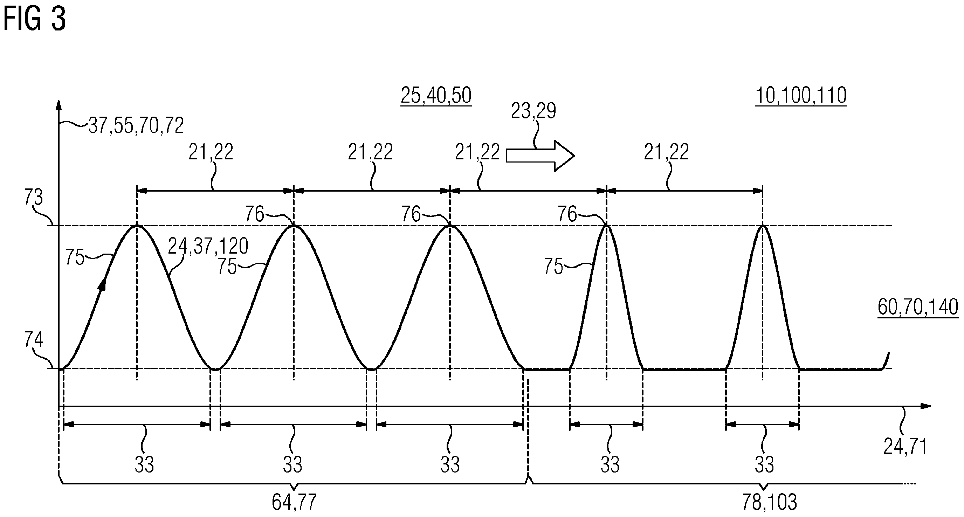

FIG 3 zeigt in einem Diagramm 70 schematisch den Ablauf einer ersten Ausführungsform des beanspruchten Verfahrens 100 zur Ermittlung eines Verschleißzustands 29 einer Kupplung 10, wie exemplarisch in FIG 1 oder FIG 2 dargestellt. Das Verfahren 100 in FIG 3 geht davon aus, dass der erste Schritt 110 bereits abgeschlossen ist, in dem ein bestimmungsgemäßer Betriebszustand der Kupplung 10 eingeleitet wird. Das Diagramm 70 in FIG 3 weist eine horizontale Zeitachse 71 auf, die dem Ablauf der Umfangsbewegung 24 der Kupplung entspricht. Das Diagramm 70 weist auch eine vertikale Größenachse 72 auf, an der als physikalische Größe eines kombinierten Magnetfelds 40 eine magnetische Flussdichte 37 aufgetragen ist. Das Diagramm 70 zeigt im Wesentlichen den Verlauf von Messsignalen 55, die sich an der Sensorvorrichtung 50 während der Umfangsbewegung 24 der Kupplung ergeben.

Beim Passieren des kombinierten Magnetfelds 40 ergibt sich bei der magnetischen Flussdichte 37 ein sich wiederholendes Maximum 73. Die Maxima 73 entsprechen einer maximalen magnetischen Flussdichte 37, die sich im Umfangsbereich 41 zwischen dem ersten und zweiten Magneten 32, 34 ergeben. Die von der Sensorvorrichtung 50 erfasste magnetische Flussdichte 37 erreicht auch periodisch ein Minimum 74, wenn sich der erste und zweite Magnet 32, 34 auf einer der Sensorvorrichtung 50 abgewandten Seite der Kupplung 10 befinden. Die Minima 74 und Maxima 73 werden mit einer Periodendauer 22 erreicht, die der Drehgeschwindigkeit 21 der Kupplung entspricht. In einem verschleißfreien Betriebszustand 77 zeigt der Verlauf der magnetischen Flussdichte 37 einen Gradienten 75, der zu einer erhöhten Pulsbreite 33 des Messignals 55 über der Zeitachse 71 führt. Der Gradient 75, der beispielsweise in FIG 2 einem örtlichen Gradienten entspricht, wird durch die Umfangsbewegung 24, die die Sensorvorrichtung 50 passiert, als zeitlicher Gradient 75 im Messsignal 55 aufgelöst. Die Pulsbreite 33, der Gradient 75 der magnetischen Flussdichte 37 und auch eine daraus ermittelbare Krümmung 76 im Verlauf des Messsignals 55 bilden jeweils eine physikalische Größe des kombinierten Magnetfelds 40. Das kombinierte Magnetfeld 40 stellt im verschleißfreien Betriebszustand 77 ein Referenzmagnetfeld 64 dar.

Durch das Eintreten eines Verschleißzustands 29 an der Kupplung 10 wird der Umfangsabstand 23 zwischen dem ersten und zweiten Magneten 32, 34 verringert. Daraus resultiert auch eine Veränderung des kombinierten Magnetfelds 40. In einem verschleißbehafteten Betriebszustand 78 weist das Messsignal 55 eine gegenüber dem verschleißfreien Betriebszustand 77, also im Referenzmagnetfeld 64, eine reduzierte Pulsbreite 33 auf. Gleichermaßen ist der Gradient 75 der magnetischen Flussdichte 37 in der Umgebung eines Maximums 73 größer als im Referenzmagnetfeld 64. In einem zweiten Schritt 120 des Verfahrens 100 wird zumindest eine der physikalischen Größen des kombinierten Magnetfelds 40 erfasst. In einem dritten Schritt 130 wird eine Abweichung zwischen dem Referenzmagnetfeld 64 und der zumindest einen physikalischen Größe ermittelt, die im zweiten Schritt 120 erfasst wird. Dabei kann zusätzlich ein vorliegendes Drehmoment 25 in der Kupplung 10 berücksichtigt werden. In einem vierten Schritt 140 wird anschließend basierend auf der ermittelten Abweichung der vorliegende Verschleißzustand 29 der Kupplung 10 ermittelt. Zumindest im zweiten, dritten und vierten Schritt 120, 130, 140 wird das Verfahren 100 mittels eines Computerprogrammprodukts 70 durchgeführt, das auf einer Auswertungseinheit 60 ausgeführt wird.

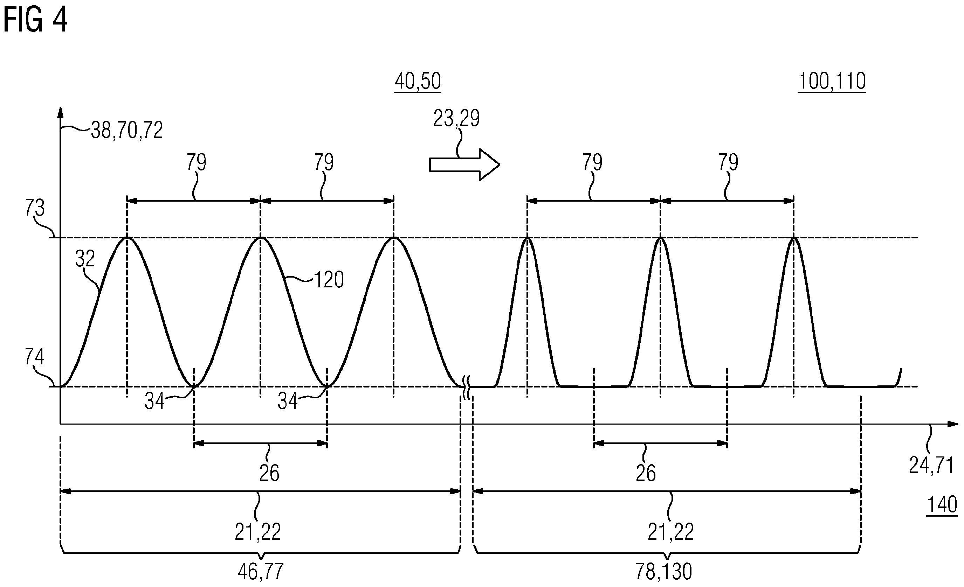

Eine zweite Ausführungsform des beanspruchten Verfahrens 100 ist schematisch in FIG 4 dargestellt. Im Einzelnen zeigt FIG 4 ein Diagramm 70, das eine horizontale Zeitachse 71 aufweist, die dem Ablauf der Umfangsbewegung 24 der Kupplung 10 abbildet, bei der das Verfahren 100 durchgeführt wird. Das Diagramm 70 weist auch eine vertikale Größenachse 72 auf, an der betragsmäßig ein Feldlinienwinkel 38 aufgetragen ist, der durch eine Sensorvorrichtung 50 erfasst wird. Das Diagramm 70 geht von einem Zustand aus, in dem der erste Schritt 110, also das Einleiten eines bestimmungsgemäßen Betriebszustands der Kupplung 10 bereits erfolgt ist. Das Diagramm 70 zeigt im Wesentlichen den Verlauf eines Messsignals 55 für einen Feldlinienwinkel 38, der in einem randseitigen Axialbereich 43 erfasst wird. Ein kombiniertes Magnetfeld 40 mit einem derartigen Verlauf des erfassten Feldlinienwinkels 38 ist beispielsweise in FIG 2 abgebildet. Der Feldlinienwinkel 38 stellt die physikalische Größe dar, die im zweiten Schritt 120 ermittelt wird.

In einem verschleißfreien Zustand 77 ist der Feldlinienwinkel 38 im Wesentlichen Null, also parallel zur Drehachse 15 der Kupplung 10, was einem Minimum 74 entspricht. Wenn der sich erste Magnet 32 der Sensorvorrichtung 50 nähert, erfolgt ein betragsmäßiger Anstieg des Feldlinienwinkels 38. Der erfasst Feldlinienwinkel 38 erreicht im Bereich eines Scheitelpunkts 47 einer Schlaufe 45, die durch eine Feldlinie 35 des kombinierten Magnetfelds 40 gebildet wird, ein Maximum 73. Dieses Maximum 73 entspricht einem rechten Winkel. Wenn der erste Magnet 32 die Sensorvorrichtung 50 passiert, erreicht der erfasste Feldlinienwinkel 38 ein Minimum. Der erste Magnet 32 ist im Wesentlichen axial ausgerichtet an der ersten Kupplungshälfte 12 angeordnet. Im Bereich des ersten Magneten 32 treten die Feldlinien 35 des kombinierten Magnetfelds 40 somit im Wesentlichen parallel zur Drehachse 15 in den ersten Magneten 32 ein. Im Bereich zwischen dem ersten und zweiten Magneten 32, 34 weist das kombinierte Magnetfeld 40 auch Feldlinien 35 auf, die eine Schlaufe 45 beschreiben. Im Bereich eines Scheitelpunkts 47 dieser Schlaufe 45 erreicht der Feldlinienwinkel 38 ein betragsmäßiges Maximum 73, das in FIG 4 zwischen den Bezugszeichen 32 und 34 liegt. Analog zum ersten Magneten 32 passiert das kombinierte Magnetfeld 40 auch den zweiten Magneten 34, wo die Feldlinien 35 ebenfalls im Wesentlichen parallel zur Drehachse 15 eintreten und der Feldlinienwinkel 38 auf ein Minimum 74, also im Wesentlichen Null, zurückgeht. Die beschriebenen drei Maxima 73 und Minima 74 des Feldlinienwinkels 38 werden in der Periodendauer 22 durchlaufen, die durch eine Drehgeschwindigkeit 21 der Kupplung 10 vorgegeben ist. Zwischen den Minima 74 liegen jeweils Intervalle, die unter anderem durch die Druckkraft 26 bestimmt sind, die im Umfangsrichtung 13 zwischen der ersten und zweiten Kupplungshälften 12, 14 vorliegen. Des Weiteren liegen zwischen den Maxima 73 des Feldlinienwinkels 38 zeitliche Maxima-Intervalle 79 vor. Das Verhältnis der Dauern der jeweiligen Maxima-Intervalle 79 und/oder deren Absolutwerte variieren mit fortschreitendem Verschleiß 29. Die Maxima-Intervalle 79 charakterisieren das kombinierte Magnetfeld 40, wobei ein verschleißarmer Zustand, wie in FIG 4 links dargestellt, ein Referenzmagnetfeld 64 darstellt, und die Maxima-Intervalle 79, wie in FIG 4 rechts dargestellt, einen jeweils vorliegendes kombiniertes Magnetfeld 40, auf das bezogen im dritten Schritt 130 eine Abweichung ermittelt wird, aus dem wiederum im vierten Schritt 140 der Verschleißzustand ermittelt wird.

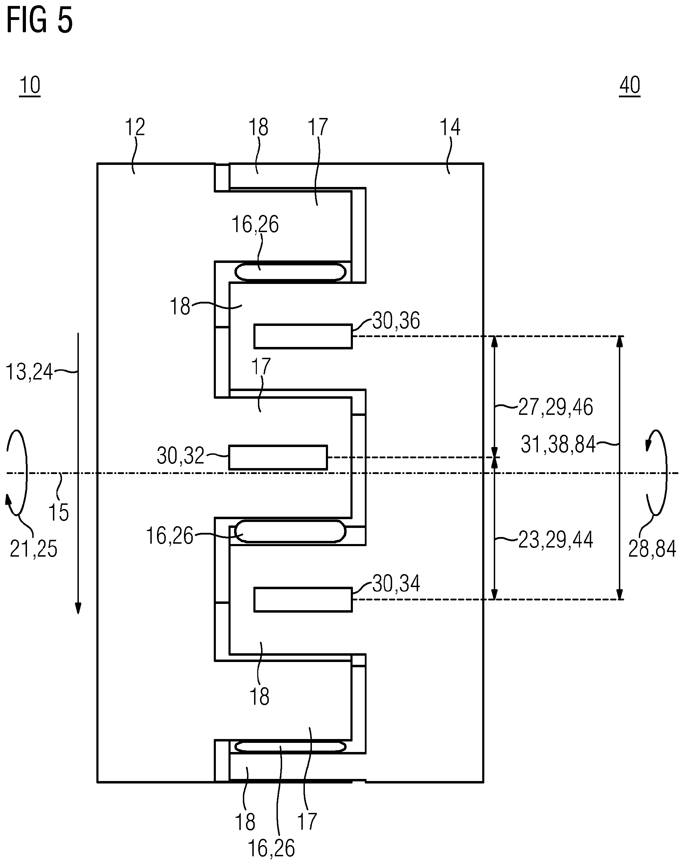

FIG 5 zeigt eine zweite Ausführungsform der beanspruchten Kupplung 10, die eine erste und eine zweite Kupplungshälfte 12, 14 umfasst. Im bestimmungsgemäßen Betrieb dreht sich die Kupplung 10 mit einer Drehgeschwindigkeit 21 Dum eine Drehachse 15, um die ein Drehmoment 25 eingeleitet wird. Die erste Kupplungshälfte 12 weist eine Mehrzahl an ersten Klauen 17 auf und die zweite Kupplungshälfte 14 eine Mehrzahl an zweiten Klauen 18, so dass die Kupplung 10 als Klauenkupplung ausgebildet ist. Zwischen den ersten und zweiten Klauen 17, 18 sind elastische Dämpfungselemente 16 angeordnet, die aus Gummi oder einem Elastomer hergestellt sind. Durch das Drehmoment 25, das in die erste Kupplungshälfte 12 eingeleitet wird, wird eine Last 28 angetrieben, die zu einer Abtriebseinheit 84 gehört. Dadurch wird eine Umfangsbewegung 24 in eine Umfangsrichtung 13, die der Drehrichtung 21 der Drehmoments 25 entspricht, von der ersten auf die zweite Kupplungshälfte 12, 14 übertragen. Die elastischen Dämpfungselemente 16 sind dabei jeweils zwischen einer ersten und einer zweiten Klaue 17, 18 eingeklemmt und werden über eine Druckkraft 26 zusammengedrückt. Zwischen einer ersten und einer zweiten Klaue 17, 18 stellt sich dadurch ein Umfangsabstand 23 ein. Durch Verschleiß 29 an der Kupplung 10, insbesondere an den elastischen Dämpfungselementen 16 ändert sich der Umfangsabstand 23 zwischen einer ersten und einer zweiten Klaue 17, 18. Dies entspricht einem Verdrehwinkel 19 zwischen der ersten und zweiten Kupplungshälfte 12, 14.

An der ersten Kupplungshälfte 12 ist an deren Außenfläche im Bereich einer ersten Klaue 17 ein Magnet 30 angeordnet, der als erster Magnet 32 dient. An der zweiten Kupplungshälfte 14 ist an deren Außenfläche im Bereich einer zweiten Klaue 18 ein Magnet 30 angeordnet, der als zweiter Magnet 34 dient. Ferner ist auf einer weiteren zweiten Klaue 18 an der zweiten Kupplungshälfte 14 ein Magnet 30 angeordnet, der als dritter Magnet 36 dient. Der zweite und dritte Magnet 34, 36 sind in einem während des Betriebs der Kupplung 10 unveränderlichen Montageabstand 31 zueinander angeordnet. Der erste Magnet 32 ist im Umfangsrichtung 13 zwischen dem zweiten und dem dritten Magneten 34, 36 positioniert. Dementsprechend ergibt sich zwischen dem ersten und zweiten Magneten 32, 34 ein erster Umfangsabstand 23 und zwischen dem ersten und dritten Magneten 32, 36 ein zweiter Umfangsabstand 27. Bei einer Umfangsbewegung 24 der Kupplung 10 passieren die Magnete 32, 34, 36 eine nicht näher dargestellte Sensorvorrichtung 50 mit einer ersten und einem zweiten Zeitdifferenz 44, 46, die mit dem ersten bzw. zweiten Umfangsabstand 23, 27 korrespondieren. Durch Verschleiß 2 an den Dämpfungselementen 16 sind der erste und zweite Umfangsabstand 23, 27, und damit auch die erste und zweite Zeitdifferenz 44, 46 veränderlich. Hierdurch ergibt sich eine Veränderung eines nicht näher dargestellten kombinierten Magnetfelds 40, das durch den ersten, zweiten und dritten Magneten 32, 34, 36 ausgebildet wird. Ein solchen durch Verschleiß 29 bedingtes Verändern ist durch die nicht näher gezeigte Sensorvorrichtung 50 erfassbar. Dazu können beispielsweise Verfahren 100 gemäß FIG 2, FIG 3, FIG 4 in angepasster Weise oder ein Verfahren 100 nach FIG 5 verwendet werden.

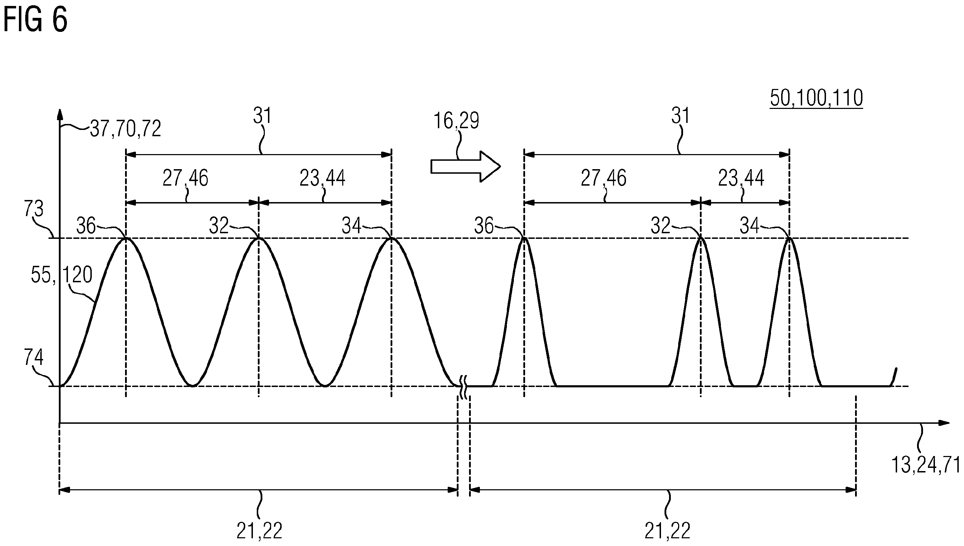

In FIG 6 ist schematisch der Ablauf einer dritten Ausführungsform des beanspruchten Verfahrens 100 abgebildet. Das Verfahren 100 ist beispielsweise bei einer Kupplung 10 nach FIG 5 einsetzbar. Im Einzelnen zeigt FIG 6 ein Diagramm 70, das eine horizontale Zeitachse 71 aufweist, die dem Ablauf der Umfangsbewegung 24 der Kupplung 10 abbildet, bei der das Verfahren 100 durchgeführt wird. Das Diagramm 70 weist auch eine vertikale Größenachse 72 auf, an der betragsmäßig eine Flussdichte 37 aufgetragen ist, die durch eine Sensorvorrichtung 50 erfasst wird. Das Diagramm 70 geht von einem Zustand aus, in dem der erste Schritt 110, also das Einleiten eines bestimmungsgemäßen Betriebszustands der Kupplung 10 bereits erfolgt ist. Das Diagramm 70 zeigt im Wesentlichen den Verlauf eines Messsignals 55 für eine Flussdichte 37, in einem Bereich, in dem die ersten und zweiten Klauen 17, 18 der Kupplungshälften 12, 14 ineinandergreifen. Die Flussdichte 37 stellt die physikalische Größe dar, die im zweiten Schritt 120 ermittelt wird. Das Passieren des ersten, zweiten bzw. dritten Magneten 32, 34, 36 ist als eine Abfolge von Maxima 73 und Minima 74 der Flussdichte 37 erfassbar.

In einem verschleißarmen Zustand, der in FIG 6 links dargestellt ist, passieren ein erster, zweiter und dritter Magnet 32, 34, 36 eine nicht näher dargestellte Sensorvorrichtung 50. Der erste Magnet 32 ist entlang einer Umfangsrichtung 13, in die die Umfangsbewegung 24 erfolgt, zwischen dem zweiten und dritten Magneten 34, 36 angeordnet. Im verschleißarmen Zustand 29 liegt zwischen dem ersten Magneten und dem zweiten Magneten 34 ein erster Umfangsabstand 23 vor und zwischen dem ersten Magneten 32 und dem dritten Magneten 36 ein zweiter Umfangsabstand 27. Zwischen dem zweiten und dritten Magneten 34, 36 liegt ein im Betrieb, also während des Verfahrens 100, unveränderlicher Montageabstand 31 vor. Im bestimmungsgemäßen Betriebszustand, der im ersten Schritt 110 eingeleitet wird, liegt im Muster des Messsignal 55 eine Periodendauer 22, die einer Drehgeschwindigkeit 21 der Kupplung 10 entspricht.

Durch einen Verschleiß 29, der im Betrieb der Kupplung 10 auftritt, werden Dämpfungselemente 16 zwischen der ersten und zweiten Kupplungshälfte 12, 14 verschlissen, so dass der erste und zweite Umfangsabstand 23, 27 zwischen dem ersten, zweiten und dritten Magneten 32, 34, 36 ändern. Im Zustand mit Verschließt, wie in FIG 6 rechts abgebildet, ist der erste Umfangsabstand 23 zwischen dem ersten und zweiten Magneten 32, 34 gegenüber dem verschleißarmen Zustand verringert. Der zweite Umfangsabstand 27 zwischen dem ersten und dritten Magneten 32, 36 ist gegenüber dem verschleißarmen Zustand erhöht. Der erste und zweite Umfangsabstand 23, 27 korrespondieren hierbei mit einer ersten bzw. zweiten Zeitdifferenz 44, 46 zwischen Maxima 73 des Messsignals 55. Die ersten bzw. zweite Zeitdifferenz 44, 46 charakterisiert somit ein nicht näher gezeigtes kombiniertes Magnetfeld 40, das durch den ersten, zweiten und dritten Magneten 32, 34, 36 hervorgerufen wird. Die in FIG 6 rechts gezeigten Änderungen der ersten bzw. zweiten Zeitdifferenz 44, 46 erlauben es damit, den eigetretenen Verschleiß 29 zu beschreiben und zu bemessen.

Dadurch wird im Sinne des dritten Schritts 130 des beanspruchten Verfahrens 100 eine Abweichung des kombinierten Magnetfelds 40 dargestellt, durch die in einem vierten Schritt 140 ein verschleißbedingter Verdrehwinkel 19 zwischen der ersten und zweiten Kupplungshälfte 12, 14 ermittelt wird. Durch diesen wiederum ist auch der vorliegende Verschleiß 29 ermittelbar.

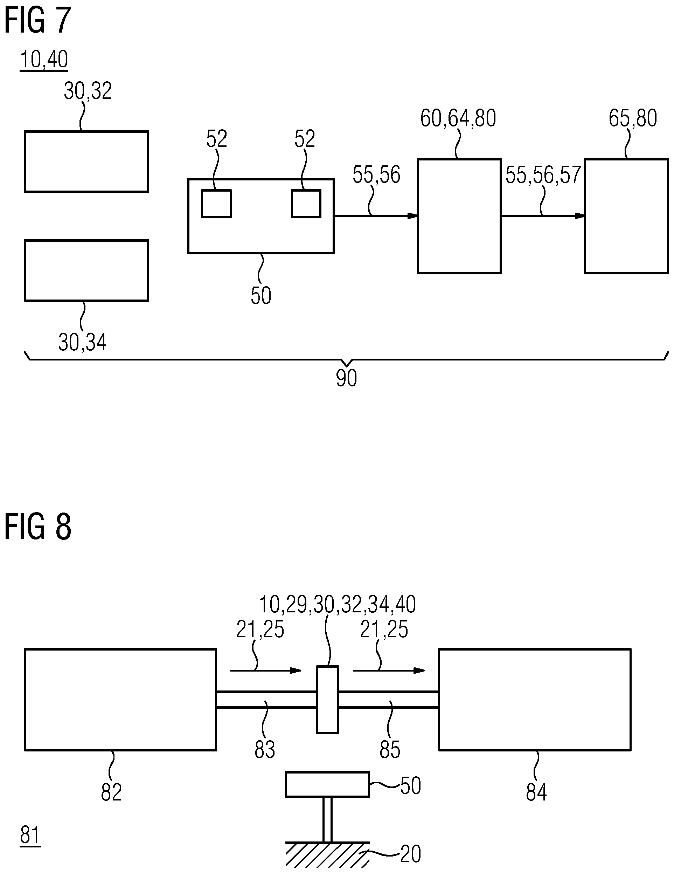

FIG 7 zeigt schematisch den Aufbau eines Systems 90, mit dem ein Verschleißzustand einer nicht näher dargestellten Kupplung 10 erfassbar ist. Neben der Kupplung 10 umfasst das System 90 eine Sensorvorrichtung 50, die eine Mehrzahl an Sensoren 52 aufweist. Die Sensoren 52 sind einzeln oder in Kombination dazu geeignet, eine Veränderung eines kombinierten Magnetfelds 40 zu erfassen, das von Magneten 30 der Kupplung 10 hervorgerufen werden. Das kombinierte Magnetfeld 30 wird durch zumindest einen ersten Magneten 32 und einen zweiten Magneten 34 ausgebildet, die an der Kupplung 10 angeordnet sind. Durch die Sensorvorrichtung 50 werden Messsignale 55 erzeugt, die über eine kommunikative Datenverbindung 56 an eine Auswertungseinheit 60 übermittelt werden. Die Auswertungseinheit 60 weist einen Speicher auf, in dem Daten zu einem Referenzmagnetfeld 64 dauerhaft gespeichert sind. Auf der Auswertungseinheit 60 ist auch ein Computerprogrammprodukt 80 gespeichert, das dazu ausgebildet ist, die Messsignale 55 zumindest auszuwerten. Durch das Computerprogrammprodukt 80 werden die Messsignale 55 weiterverarbeitet zu berechneten Daten 57, die über eine kommunikative Datenverbindung 56 an eine übergeordnete Auswertungseinheit 65 weitergeleitet werden. Auf der übergeordneten Auswertungseinheit 65 ist auch ein Computerprogrammprodukt 80 ausführbar gespeichert. Die Computerprogrammprodukte 80 auf der Auswertungseinheit 60 und der übergeordneten Auswertungseinheit 65 wird über die kommunikative Datenverbindung 56 zusammen und verwirklichen ein Verfahren 100 zum Ermitteln eines Verschleißzustands in der Kupplung 10. Die Auswertungseinheit 60 ist dabei der Sensorvorrichtung 50 und/oder der Kupplung 10 direkt zugeordnet. Die kommunikative Datenverbindung 56 zwischen der Auswertungseinheit 60 und der übergeordneten Auswertungseinheit 65 ist als Netzwerkverbindung oder Internetverbindung ausgebildet. Ferner ist die übergeordnete Auswertungseinheit 65 als Computer-Cloud, als Server oder als Leitrechner ausgebildet.

Darüber hinaus ist in FIG 8 eine Ausführungsform der beanspruchten Industrie-Applikation 81 dargestellt. Die Industrie-Applikation 81 umfasst eine Antriebseinheit 82, über die mit einer Drehgeschwindigkeit 21 ein Drehmoment 25 über eine Ausgangswelle 83 Antriebsleistung bereitgestellt wird. Die Ausgangswelle 83 ist über eine Kupplung 10 mit einer Eingangswelle 85 verbunden, so dass die Drehgeschwindigkeit 21 und das Drehmoment 25, also die Antriebsleistung, auf die Eingangswelle 85 übertragen wird. Die Eingangswelle 85 gehört zu einer Abtriebseinheit 84, die beispielsweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ausgebildet sein kann. Die Kupplung 10 ist mit Magneten 30 versehen, die als erster und zweiter Magnet 32, 34 dienen. Ferner ist die Kupplung 10 gemäß zumindest einem der oben skizzierten Ausführungsformen ausgebildet. Durch den ersten und zweiten Magneten 32, 34 wird ein nicht näher abgebildetes kombiniertes Magnetfeld 40 erzeugt, dessen Veränderungen, die durch Verschleiß 29 an der Kupplung 10 hervorgerufen werden, von einer Sensorvorrichtung 50 erfassbar sind. Die Sensorvorrichtung 50 ist gemäß zumindest einem der oben skizzierten Ausführungsformen ausgebildet. Die Sensorvorrichtung 50 ist dabei starr mit der Umgebung 20 der Kupplung 10 verbunden. Die Umgebung 20 kann dabei beispielsweise eine Wandung oder der Untergrund sein. Die Sensorvorrichtung 50 ist zu einem berührungslosen Erfassen eines Verschleiß 29 in der Kupplung 10 ausgebildet ist damit separat nachrüstbar.

## Patentansprüche

1. Kupplung (10), umfassend eine erste und eine zweite Kupplungshälfte (12, 14), wobei an der ersten Kupplungshälfte (12) ein erster Magnet (32) und an der zweiten Kupplungshälfte (14) ein zweiter Magnet (34) zu einem berührungslosen Erfassen eines Verschleißzustands der Kupplung (10) angeordnet sind **dadurch gekennzeichnet, dass** zwischen der ersten und zweiten Kupplungshälfte (12, 14) zumindest ein verschleißbehaftetes Dämpfungselement (16) angeordnet ist.

2. Kupplung (10), nach Anspruch 1, wobei der erste und zweite Magnet (32, 34) ein kombiniertes Magnetfeld (40) bilden und zu einer Veränderung des kombinierten Magnetfelds (40) relativ zueinander beweglich ausgebildet sind.

3. Kupplung (10) nach Anspruch 1 oder 2, **dadurch gekennzeichnet, dass** der erste Magnet (32) entlang einer Umfangsrichtung (13) relativ zum zweiten Magneten (34) beweglich ist.

4. Kupplung (10) nach einem der Ansprüche 1 bis 3, **dadurch gekennzeichnet, dass** an der zweiten Kupplungshälfte (14) ein dritter Magnet (36) angeordnet ist, und der erste Magnet (32) in Umfangsrichtung (13) zwischen dem zweiten und dritten Magneten (34, 36) liegt.

5. Kupplung (10) nach einem der Ansprüche 1 bis 4, **dadurch gekennzeichnet, dass** die Veränderung des kombinierten Magnetfelds (40) eine Änderung einer magnetischen Flussdichte (37), eine Änderung eines Gradienten der magnetischen Flussdichte (37) und/oder einer Richtungsänderung von magnetischen Feldlinien (35) des kombinierten Magnetfelds (40) umfasst.

6. Kupplung (10) nach einem der Ansprüche 1 bis 5, **dadurch gekennzeichnet, dass** die Veränderung des kombinierten Magnetfelds (40) in einem Bereich (42) zwischen dem ersten und zweiten Magneten (32, 34) und/oder einem Bereich (43) neben dem ersten oder zweiten Magneten (32, 34) erfolgt.

7. System (90), umfassend eine Kupplung (10) nach einem der Ansprüche 1 bis 6 und eine Sensorvorrichtung (50), die mindestens einen Sensor (52) zu einem Erfassen einer physikalischen Größe eines Magnetfelds aufweist.

8. System (90) nach Anspruch 7, **dadurch gekennzeichnet, dass** die Sensorvorrichtung (100) stationär in einer Umgebung (20) angeordnet ist und zu einem Erfassen zumindest eines Bereichs des kombinierten Magnetfelds (40) an der Kupplung (10) positioniert ist.

9. System (90) nach Anspruch 7 oder 8, **dadurch gekennzeichnet, dass** die Sensorvorrichtung (50) zum Erfassen der Änderung der magnetischen Flussdichte (37), der Änderung des Gradienten der magnetischen Flussdichte (37) und/oder der Richtungsänderung der magnetischen Feldlinien (35) des kombinierten Magnetfelds (37) ausgebildet ist.

10. System (90) nach einem der Ansprüche 7 bis 9, **dadurch gekennzeichnet, dass** der zumindest eine Sensor (52) als Hall-Sensor oder als Reed-Kontakt ausgebildet ist

11. Verfahren (100) zum Ermitteln eines Verschleißzustands einer Kupplung (10) nach einem der Ansprüche 1 bis 6, wobei der erste und zweite Magnet (32, 34) ein kombiniertes Magnetfeld (40) hervorrufen, umfassend die Schritte:
a) Einleiten eines bestimmungsgemäßen Betriebs der Kupplung (10) ;
b) Erfassen zumindest einer physikalischen Größe des kombinierten Magnetfelds (40) mittels zumindest einer Sensorvorrichtung (50);
c) Ermitteln einer Abweichung zwischen dem kombinierten Magnetfeld (40) und einem Referenzmagnetfeld (64) anhand der zumindest einen physikalischen Größe;
d) Ermitteln eines Verschleißzustands der Kupplung (10) mittels der in Schritt c) ermittelten Abweichung;
wobei die Abweichung des kombinierten Magnetfelds (40) einem verschleißbedingten Verdrehwinkel (19) zwischen der ersten und zweiten Kupplungshälfte (12, 14) entspricht.

12. Verfahren (100) nach Anspruch 11, **dadurch gekennzeichnet, dass** das Ermitteln der physikalischen Größe in Schritt b) berührungslos erfolgt.

13. Verfahren (100) nach einem der Ansprüche 11 oder 12, **dadurch gekennzeichnet, dass** Schritt c) unter Berücksichtigung eines in der Kupplung (10) vorliegenden Drehmoments (25) erfolgt.

14. Verfahren (100) nach einem der Ansprüche 11 bis 13, **dadurch gekennzeichnet, dass** aus Messsignale (55) der zumindest einen physikalischen Größe des kombinierten Magnetfelds (40) Störungen herausgefiltert werden.

15. Computerprogrammprodukt (80) zum Empfangen und Verarbeiten von Messsignalen (55) von einer Sensorvorrichtung (50), wobei das Computerprogrammprodukt (80) zum Durchführen zumindest eines der Verfahren (100) nach einem der Ansprüche 11 bis 14 ausgebildet ist.

16. Industrie-Applikation (81), umfassend eine Antriebseinheit (82) mit einer Ausgangswelle (83) und einer Abtriebseinheit (84) mit einer Eingangswelle (85), wobei die Eingangswelle (85) und die Ausgangswelle (83) über eine Kupplung (10) nach einem der Ansprüche 1 bis 6 miteinander drehmomentübertragend verbunden sind.

17. Verwendung einer Sensorvorrichtung (50), die einen Sensor (52) zu einem Erfassen zumindest einer physikalischen Größe eines Magnetfelds umfasst zu einer Ermittlung eines Verschleißzustands einer Kupplung (10) nach einem der Ansprüche 1 bis 6.

## Claims

1. Coupling (10), comprising a first and a second coupling half (12, 14), wherein a first magnet (32) is arranged on the first coupling half (12) and a second magnet (34) is arranged on the second coupling half (14) for contactless detection of a state of wear of the coupling (10), **characterized in that** at least one damping element (16), which is subject to wear, is arranged between the first and second coupling half (12, 14).

2. Coupling (10) according to Claim 1, wherein the first and second magnet (32, 34) form a combined magnetic field (40) and are designed so as to be movable relative to one another in order to change the combined magnetic field (40).

3. Coupling (10) according to Claim 1 or 2, **characterized in that** the first magnet (32) is movable relative to the second magnet (34) along a circumferential direction (13).

4. Coupling (10) according to any one of Claims 1 to 3, **characterized in that** a third magnet (36) is arranged on the second coupling half (14), and the first magnet (32) is located between the second and third magnet (34, 36) in the circumferential direction (13).

5. Coupling (10) according to any one of Claims 1 to 4, **characterized in that** the change in the combined magnetic field (40) includes a change in a magnetic flux density (37), a change in a gradient of the magnetic flux density (37) and/or a change in direction of magnetic field lines (35) of the combined magnetic field (40).

6. Coupling (10) according to any one of Claims 1 to 5, **characterized in that** the combined magnetic field (40) is changed in an area (42) between the first and second magnet (32, 34) and/or an area (43) next to the first or second magnet (32, 34).

7. System (90), comprising a coupling (10) according to any one of Claims 1 to 6 and a sensor device (50) having at least one sensor (52) for measuring a physical variable of a magnetic field.

8. System (90) according to Claim 7, **characterized in that** the sensor device (100) is arranged so as to be stationary in an environment (20) and is positioned on the coupling (10) in order to capture at least one area of the combined magnetic field (40).

9. System (90) according to Claim 7 or 8, **characterized in that** the sensor device (50) is designed to measure the change in the magnetic flux density (37), the change in the gradient of the magnetic flux density (37) and/or the change in direction of the magnetic field lines (35) of the combined magnetic field (37).

10. System (90) according to any one of Claims 7 to 9, **characterized in that** the at least one sensor (52) is designed as a Hall sensor or as a Reed contact.

11. Method (100) for determining a state of wear of a coupling (10) according to any one of Claims 1 to 6, wherein the first and second magnet (32, 34) induce a combined magnetic field (40), said method comprising the steps of:
a) initiating intended operation of the coupling (10);
b) measuring at least one physical variable of the combined magnetic field (40) by means of at least one sensor device (50);
c) determining a deviation between the combined magnetic field (40) and a reference magnetic field (64) based on the at least one physical variable;
d) determining a state of wear of the coupling (10) by means of the deviation determined in step c);
wherein the deviation of the combined magnetic field (40) corresponds to an angle of rotation (19), which is due to wear, between the first and second coupling half (12, 14) .

12. Method (100) according to Claim 11, **characterized in that** the physical variable is determined in step b) in a contactless manner.

13. Method (100) according to either one of Claims 11 and 12, **characterized in that** step c) is carried out taking into account a torque (25) present in the coupling (10) .

14. Method (100) according to any one of Claims 11 to 13, **characterized in that** instances of interference are filtered out of measurement signals (55) of the at least one physical variable of the combined magnetic field (40) .

15. Computer program product (80) for receiving and processing measurement signals (55) from a sensor device (50), wherein the computer program product (80) is designed to carry out at least one of the methods (100) according to any one of Claims 11 to 14.

16. Industrial application (81), comprising a drive unit (82) having an output shaft (83) and an output unit (84) having an input shaft (85), wherein the input shaft (85) and the output shaft (83) are connected to one another in a torque-transmitting manner via a coupling (10) according to any one of Claims 1 to 6.

17. Use of a sensor device (50) comprising a sensor (52) for measuring at least one physical variable of a magnetic field in order to determine a state of wear of a coupling (10) according to any one of Claims 1 to 6.

## Revendications

1. Embrayage (10), comprenant une première et une deuxième moitié d'embrayage (12, 14), un premier aimant (32) étant disposé au niveau de la première moitié d'embrayage (12) et un deuxième aimant (34) au niveau de la deuxième moitié d'embrayage (14) en vue d'une détection sans contact d'un état d'usure de l'embrayage (10), **caractérisé en ce qu'**au moins un élément d'amortissement (16) soumis à l'usure est disposé entre la première et la deuxième moitié d'embrayage (12, 14).

2. Embrayage (10) selon la revendication 1, le premier et le deuxième aimant (32, 34) formant un champ magnétique combiné (40) et étant configurés mobiles l'un par rapport à l'autre en vue d'une modification du champ magnétique combiné (40).

3. Embrayage (10) selon la revendication 1 ou 2, **caractérisé en ce que** le premier aimant (32) est mobile le long d'une direction périphérique (13) par rapport au deuxième aimant (34).

4. Embrayage (10) selon l'une des revendications 1 à 3, **caractérisé en ce qu'**un troisième aimant (36) est disposé au niveau de la deuxième moitié d'embrayage (14), et le premier aimant (32) se trouve entre le deuxième et le troisième aimant (34, 36) dans la direction périphérique (13).

5. Embrayage (10) selon l'une des revendications 1 à 4, **caractérisé en ce que** la modification du champ magnétique combiné (40) comprend une modification d'une densité de flux magnétique (37), une modification d'un gradient de la densité de flux magnétique (37) et/ou un changement de direction de lignes de champ magnétique (35) du champ magnétique combiné (40).

6. Embrayage (10) selon l'une des revendications 1 à 5, **caractérisé en ce que** la modification du champ magnétique combiné (40) s'effectue dans une zone (42) entre le premier et le deuxième aimant (32, 34) et/ou une zone (43) à côté du premier et du deuxième aimant (32, 34) .

7. Système (90), comprenant un embrayage (10) selon l'une des revendications 1 à 6 et un dispositif capteur (50), qui possède au moins un capteur (52) destiné à une détection d'une grandeur physique d'un champ magnétique.

8. Système (90) selon la revendication 7, **caractérisé en ce que** le dispositif capteur (100) est disposé de manière fixe dans un environnement (20) et est positionné au niveau de l'embrayage (10) en vue d'une détection d'au moins une zone du champ magnétique combiné (40).

9. Système (90) selon la revendication 7 ou 8, **caractérisé en ce que** le dispositif capteur (50) est configuré pour détecter la modification de la densité de flux magnétique (37), la modification du gradient de la densité de flux magnétique (37) et/ou le changement de direction des lignes de champ magnétique (35) du champ magnétique combiné (37).

10. Système (90) selon l'une des revendications 7 à 9, **caractérisé en ce que** l'au moins un capteur (52) est réalisé sous le forme d'un capteur à effet Hall ou d'un contact Reed.

11. Procédé (100) de détermination d'un état d'usure d'un embrayage (10) selon l'une des revendications 1 à 6, les premier et deuxième aimants (32, 34) provoquant un champ magnétique combiné (40), comprenant les étapes suivantes :
a) initiation d'un fonctionnement conformément à sa destination de l'embrayage (10) ;
b) détection d'au moins une grandeur physique du champ magnétique combiné (40) au moyen d'au moins un dispositif capteur (50) ;
c) détermination d'un écart entre le champ magnétique combiné (40) et un champ magnétique de référence (64) à l'aide de l'au moins une grandeur physique ;
d) détermination d'un état d'usure de l'embrayage (10) au moyen de l'écart déterminé à l'étape c) ;
l'écart du champ magnétique combiné (40) correspondant à un angle de torsion lié à l'usure (19) entre la première et la deuxième moitié d'embrayage (12, 14).

12. Procédé (100) selon la revendication 11, **caractérisé en ce que** la détermination de la grandeur physique à l'étape b) s'effectue sans contact.

13. Procédé (100) selon l'une des revendications 11 ou 12, **caractérisé en ce que** l'étape c) est effectuée en tenant compte d'un couple (25) présent dans l'embrayage (10) .

14. Procédé (100) selon l'une des revendications 11 ou 13, **caractérisé en ce que** les perturbations sont éliminées par filtrage des signaux de mesure (55) de l'au moins une grandeur physique du champ magnétique combiné (40) .

15. Produit de programme informatique (80) destiné à recevoir et à traiter des signaux de mesure (55) provenant d'un dispositif capteur (50), le produit de programme informatique étant configuré pour mettre en œuvre au moins l'un des procédés (100) selon l'une des revendications 11 à 14.

16. Application industrielle (81), comprenant une unité d'entraînement (82) pourvue d'un arbre de sortie (83) et une unité de prise de force (84) pourvue d'un arbre d'entrée (85), l'arbre d'entrée (85) et l'arbre de sortie (83) étant reliés l'un à l'autre avec transmission du couple par le biais d'un embrayage (10) selon l'une des revendications 1 à 6.

17. Utilisation d'un dispositif capteur (50), lequel comporte un capteur (52) destiné à une détection d'au moins une grandeur physique d'un champ magnétique en vue d'une détermination d'un état d'usure d'un embrayage (10) selon l'une des revendications 1 à 6.
